# EUROPEAN PATENT SPECIFICATION

(11) **EP 2 893 174 B1**
(45) Date of publication and mention of the grant of the patent: **03.03.2021**
(21) Application number: 13759264.8
(22) Date of filing: 14.08.2013
(51) Int. Cl.: F02D 41/00, F02D 41/14, F02D 41/22, F02D 35/02, F02D 19/06, F02D 41/30

(54) **MULTI-FUEL INTERNAL COMBUSTION ENGINE OPERATION**
BETRIEB EINER MEHRSTOFF-BRENNKRAFTMASCHINE
FONCTIONNEMENT D'UN MOTEUR À COMBUSTION POLYCARBURANT

(30) Priority: 17.08.2012 FI 20125853
(43) Date of publication of application: 15.07.2015
(73) Proprietor: Wärtsilä Finland Oy, 65100 Vaasa (FI)
(72) Inventor: FORS, Patrik, 65300 Vasa (FI); GRÖNLUND, Tore, 65610 Mustasaari (FI); HÄGGDAHL, Tore, 65610 Smedsby (FI); NUORMALA, Kimmo, 65280 Vaasa (FI); PORTIN, Kaj, 65300 Vaasa (FI); WILLIAMSSON, Jonas, 65530 Helsingby (FI)
(74) Representative: Genip Oy
(86) International application number: PCT/FI2013/050798
(87) International publication number: WO 2014/027141

(56) References cited:
- WO-A1-2011/111164
- WO-A2-2011/154609
- US-A1- 2010 170 470
- US-A1- 2012 143 480

## Description

The invention relates to a method of operating a multi-cylinder internal combustion piston engine and to a multi-cylinder internal combustion piston engine. Particularly, the invention relates to operating such an engine with at least two different fuels.

### Background art

Reciprocating piston engine is a known power source for electricity production in stationary power plants as well as in marine vessels. It is also known to operate such engine by making use of gaseous fuel. For power plants using gas as fuel, it is usually possible to feed the power plant with gas of various qualities, more specifically various heat values. Usually, in order to provide reliable operation of the engine the engine has certain requirements for the fuel quality, also in the terms of the heat value.

Safe and reliable use of a gas engine, which here means a piston engine running on gaseous fuel, particularly as a marine engine, sets special requirements for the fuel feed system, the most important of which is that unexpected shut down of the engine is not acceptable under any circumstances. Because of this, a gas engine as a marine engine comprises a backup system in the fuel feed system. Typically, the gaseous fuel used as main fuel in the gas engine is fed into the combustion chamber of the engine mixed with air. It is ignited by injecting a very small amount of ignition fuel, which is ignited due to the existing conditions and thereby also ignites the gaseous fuel. In this case, as far as the gaseous fuel is concerned, the engine is run according to the otto-process. In case there is a malfunction in the above-mentioned operation affecting the running of the engine, the engine can be provided with a backup fuel feed systems based on using only liquid fuel. In this case there is a transfer from running on gas to running on liquid fuel and the engine is run according to the diesel process.

In US 2010170470 A1 there is described a fuel delivery system for an engine as well as a method of its operation. The fuel delivery system includes a first fuel injector for delivering a first fuel to a cylinder of the engine, a second fuel injector for delivering a second fuel to the cylinder, an electrical relay system disposed between a first electrical potential and each of the first and second fuel injectors, an electronic driver disposed between a second electrical potential and each of the first and second fuel injectors, and a control module. The control module is configured to switch the electrical relay system between first and second positions to select one of the first and second fuels, respectively. The electronic driver is closed by the control module to deliver the selected one of the first or second fuel to the first cylinder via a respective one of the first or second fuel injectors. In US 2010170470 the fuel injectors for delivering the first fuel are activated or deactivated all together, and the fuel injectors for delivering the second fuel are activated or deactivated all together, respectively. Thus, with this arrangement some shortcoming will still remain, particularly in respect of controllability and flexibility

Further relevant prior art is disclosed in documents WO 2011/154609 A2 and WO 2011/111164 A1 (see also late published US 2012/0245825 A1 for an English language version of the patent family).

It is an object of the invention to provide method of operating a multi-cylinder internal combustion engine by means of which the operation of the engine is more reliable during the change-over of the fuel.

### Disclosure of the Invention

Objects of the invention can be met in accordance with the definitions of the independent claims. Dependent claim 2 describes more details of different embodiments of the invention.

In a method of operating a multi-cylinder internal combustion piston engine, the engine comprising a gaseous fuel feed system and a liquid fuel feed system, while the engine is running the engine is operated by introducing gaseous fuel to the engine; during the operation control parameters are acquired from the engine indicating the combustion process with the first fuel in said at least one of the cylinders; the control parameters are compared to their respective target values and in case a difference between any of the acquired control parameters and its target value is more than a predetermined difference the introduction of the first fuel is stopped to said cylinder and subsequently the introduction of the second fuel to the cylinder is commenced while in other cylinders of the engine combustion of the same fuel is proceeded. The operation the second fuel feed system is controlled by two actuation systems, and that during executing the step of operating at least one of the cylinders of the engine by combusting the first fuel the second fuel feeding system is maintained at standby state by maintaining one of the two actuation systems at a correct control position allowing quick transition of fuel.

According to the invention the engine is operated by combusting the first fuel in all of the cylinders of the engine, and the first fuel is gaseous fuel and the second fuel is liquid fuel.

According to the invention the operation the second fuel feed system is controlled by two actuation systems, a primary control unit of which is actively maintained at a correct control position proportional to engine's load regardless of being the actual active fuel system, and a secondary control unit is set to maintain the operation of the second fuel system closed.

According to an embodiment of the invention control parameters of combustion process of the gaseous fuel in at least one cylinder of the engine are controlled and set to reach predetermined conditions of combustion; and after operating the engine in diesel mode, a transfer of fuel is practiced i.e. the engine is transferred to gas-mode and gaseous fuel is introduced to and combusted in the cylinder and the control parameters are used to control the combustion process of the gaseous fuel in said cylinder.

According to the invention, a difference between any of the acquired control parameters and its target value is more than a predetermined difference, introduction of the gaseous fuel to said cylindei is stopped and subsequently the introduction of the liquid fuel to the cylinder is commenced, while in other cylinders of the engine combustion of the gaseous fuel is proceeded.

Said step of determination is advantageously practiced using anyone of the following control parameters: knocking, misfiring, too high cylinder pressure, high exhaust gas temperature, and/or low exhaust gas temperature.

According to the invention, the operation of the liquid fuel feed system is controlled by two actuation systems, a primary control unit of which is actively maintained at a correct control position proportional to engine's load and, and a secondary control unit of which actuation systems is set to select the operational status of the second fuel system on or off.

Proposed in accordance with the invention is also a multi-cylinder internal combustion piston engine comprising a gaseous fuel feed system and a liquid fuel feed system and a control system arranged to control the operation of the engine, the engine further comprising control units in the gaseous and the liquid fuel feed systems the operation of the which is arranged to be controllable as defined in appended claim 3.

### Brief Description of Drawings

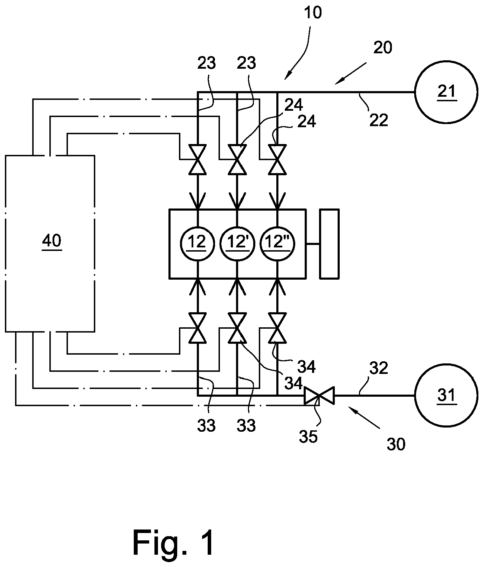

In the following, the invention will be described with reference to the accompanying exemplary, schematic drawing, in which Figure 1 illustrates a fuel feeding system for an internal combustion piston engine comprising a control system according to according to an embodiment of the invention.

### Detailed Description of Drawings

Figure 1 depicts schematically an internal combustion engine 10 having a selected number of cylinders 12, 12', 12". The engine is provided with two independent fuel systems, a first fuel system 20 and a second fuel system 30. The first fuel system is a gaseous fuel system and the second fuel system is a liquid fuel system.

The fuel systems are described in very general manner showing only such elements which are related to and necessary for understanding the operation of the engine according to the embodiments of the invention. The first fuel system 20 comprises a source of gaseous fuel 21 from which a first fuel feed line 22 extends to the engine 10. The feed line branches into branch lines 23 to each cylinder 12, 12', 12" of the engine. Each branch line 23 is provided with a dedicated feed control unit 24. Respectively the second fuel system 30 comprises a source of liquid fuel 31 from which a second fuel feed line 32 extends to the engine 10. The feed line 30 also branches into branch lines 33 to each cylinder 12, 12', 12" of the engine. Each branch line is provided with dedicated feed control unit 34, respectively.

The engine is also provided with a control system 40 which is arranged to control the operation of the engine and particularly the operation of the control units as described.

When the engine is operating as a gas engine or in gas-mode, the first fuel i.e. the gaseous fuel is introduced to the engine via the first fuel system 20. The engine is operated in normal circumstance by combusting the gaseous fuel in its cylinders in a manner known as such utilizing otto-cycle. The gaseous fuel may be ignited by means of a spark ignition or by liquid pilot fuel injected into the cylinder by means of a third fuel system (not shown). The engine may also be operated by combusting the liquid fuel in its cylinders in a manner known as such during of which fuel is introduced to the engine via the second fuel system 20 and utilizing diesel-cycle i.e. operating in diesel-mode.

The engine is operated so that while the engine is running, fuel is introduced to the engine and the cylinders 12, 12', 12" of the engine are operated by combusting the first fuel i.e. gaseous fuel in all cylinders (12, 12', 12"). During the operation of the engine control parameters are acquired from the engine indicating the condition of the combustion process in the cylinders operating in gas-mode. Departing from the invention as claimed, the engine may be operated so that a first number of the cylinders are operated by combusting gaseous fuel and a second number of the cylinders are operated by combusting liquid fuel, which may be called fuel sharing mode. Thus in the engine the fuel can selected to each cylinder according to need. For example a selected number of cylinders may be run in gas mode and the rest of the cylinders in diesel mode. The optimization of the performance for different fuels can be made by cylinder wise activation and control.

According to the invention, in case of a disturbance in combustion process in a cylinder 12" of the engine when operating in gas mode, only the failed cylinder 12" is transferred to diesel mode. Here such a cylinder in which either a disturbance or a more severe failure takes place, is called as a failure cylinder. The disturbance or failure causing the change-over to diesel-mode of the cylinder may be for example heavy knock, misfiring, too high cylinder pressure, high exhaust gas temperature or low exhaust gas temperature.

Instead of operating the engine in the fuel sharing mode, the engine is operated by combusting the first fuel in all of the cylinders of the engine. In this embodiment, the control parameters are acquired from the engine indicating the condition of the combustion process in each cylinder of the engine. The control parameters are acquired by or made available to the control system 40. The control parameters are compared to their respective target values by the control system 40 and in case an difference between any of the acquired control parameters and its target value is more than a predetermined difference, in anyone of the cylinders operating in gas mode, the introduction of the gaseous fuel is stopped to such a failure cylinder and subsequently the introduction of the liquid fuel to the cylinder is commenced while in other cylinders of the engine combustion of the gaseous fuel is proceeded i.e. no transfer of fuel takes place in other cylinders. Thus, according to the invention, in case of a disturbance in combustion process in a cylinder 12" or all cylinder operating in gas mode, only the failed cylinder 12" is transferred to diesel mode, even if all of the cylinders were operating in gas-mode.

The engine is provided with control units 24, 34 in the first and the second fuel systems 20, 30. Control units are systems by mean means of which the introduction of the fuel may be controlled. Control units comprise mechanical devices to effect on the fuel flow. The control units may also comprise program in or as operational part of the control system 40. In order to provide even more flexible operation, during the operation of the engine in a gas-mode utilizing the first fuel system 20, the second fuel feed system 30 is maintained at standby state which allows a quick transition of fuel to be combusted should such a disturbance take place which triggers the fuel change in a failure cylinder. In order to accomplish the desired operation the engine is provided with two control units 34, 35; a primary control unit 35 in the feed line 32 in the second fuel system 30 and a secondary control units 34 in en each branch line 33. The primary and secondary control units are arranged effect in series in the course of the fuel introduction. In other word both the primary and the secondary control unit must in position or state allow the fuel flow for injection to take place.

According to an embodiment of the invention the primary control unit comprises a main diesel pump actuator. As an example of realizing this in a certain type of engine the main diesel pump actuator is kept in correct position proportional to engine load and the individual pumps are kept in zero position with one or more pneumatic stop cylinders. In case of one cylinder failure, the pneumatic stop cylinder is deactivated and that cylinder moves to diesel mode. The fine tuning of the main diesel actuator position can be then made based on e.g. cylinder pressure.

While the engine is operated with the gaseous fuel, the operation of the second fuel feed system i.e. the liquid fuel system is controlled by making use of the two control units 34, 35. Firstly so that the primary control unit 35 is continuously maintained at a correct control position, having been set to engine's current circumstances proportional to engine's load regardless of not being the actual active, currently used fuel system, and secondly the secondary control unit 34 is set to maintain the second fuel system closed. Thus, in case the second fuel system is needed to be operated in connection with anyone of the cylinders activating the secondary control 34 sets the second fuel system in operative state. And, since the primary control system has the correct control position for immediate action the transition is quick and reliable. The secondary control unit 34 is also a dedicated feed control unit for each branch line 33.

During the gas-mode operation the engine's control parameters of combustion process in at least one cylinder of the engine are controlled and set to reach predetermined conditions of combustion. These control parameters are stored or made available to the control system 40 of the engine. And in case any cylinder should have failed i.e. there has been a transfer of fuel to liquid fuel to diesel mode as explained above, the cylinder is be transferred back to gas mode as soon as needed or desired. This takes place so that introduction of gaseous fuel is started and introduction of liquid fuel is stopped to the previously failed cylinder only, and the above mentioned control parameters of gaseous fuel combustion process are used to control the combustion process of the gaseous fuel in said cylinder. This way the correct control parameter may be applied for the combustion right from the beginning.

In an example departing from the claimed invention, when the engine is operated by liquid fuel and the operation is desired to be shifted to gas mode a sequence of following steps may be executed. It is also conceivable that the engine may be operated so that different fuels are combusted in different cylinders simultaneously, in which case the liquid fuel would be combusted in at least two cylinders of the engine to which the sequence of steps is executed.

Thus, in this example, the liquid fuel is introduced to the engine 10 via the second fuel system 20, at least to its two cylinders in which the fuel is combusted. Next, when the sequence of the steps is commenced the introduction of second fuel is stopped to a first one 12 of the at least two cylinders 12, 12', and substantially simultaneously, or at the latest for the next cycle of cylinder the introduction of gaseous fuel is commenced to the first cylinder 12.

Control parameters of combustion process of the first fuel in the first cylinder 12 are controlled by the control system 40 and set to reach predetermined conditions which are stored or made available to the control system as well. Subsequently gaseous fuel is introduced to the second one 12' of the at least two cylinders and combusted therein under control of the control system 40. Thus, the change-over of the combusted fuel from the first fuel to the second fuel is performed one cylinder at a time. This way there is only one cylinder at a time in which such a transition is occurring and the overall operation is stable.

In order to further improve the operation of the engine in this example when the gaseous fuel is introduced to the second one 12' of the at least two cylinders and combusted therein, the control parameters set in connection with combustion in the first cylinder 12 could be used to control the combustion process of the first fuel in the second cylinder 12'. This way the combustion process of the fuel is controlled in satisfactory manner from the very beginning.

Here, it is possible to use the control parameters set in connection with the first cylinder to control only a starting stage of combustion process of the fuel in the second cylinder, during a predetermined period of time. After the predetermined period of time to control of the combustion process in the second cylinder may be controlled individually or so that the combustion process is taken into account in defining and setting the control parameters. Advantageously the starting stage lasts shortest period of time allowed by the used control system, the minimum being only one ignition in the cylinder. Particularly, since the gaseous fuel is injected during gas exchange stage and liquid fuel is injected during work stage, the selection of used fuel is made before each gas exchange stage i.e. before injecting the gaseous fuel.

Here, the control parameters set in connection with the first cylinder are used to control the combustion process of the first fuel in all other cylinders of the engine.

Thus the introduction of gaseous fuel is stopped to the failure cylinder, and subsequently the introduction of liquid fuel to the failure cylinder is commenced and the engine is operated so that liquid fuel is introduced to the failure cylinder, operating in diesel mode, while other cylinders of the engine are operated still by gaseous fuel operating in gas - mode.

While the invention has been described herein by way of an embodiment, the scope of the invention is solely defined by the appended claims.

## Claims

1. A method of operating a multi-cylinder internal combustion piston engine (10), the engine comprising a gaseous fuel feed system (20) and a liquid fuel feed system (30), where the operation of the liquid fuel feed system is controlled by two actuation systems, a primary control unit (35) and a secondary control unit (34) for controlling the introduction of the liquid fuel, which are arranged in series in the liquid fuel feed system, in which method, while the engine is running
(a) the engine is operated by combusting the gaseous fuel in all of the cylinders of the engine in gas-mode;
(b) during the operation control parameters indicating the condition of the gas-mode combustion process are acquired from the engine indicating the combustion process with the gaseous fuel;
(c) the control parameters are compared to their respective target values and
(d) in case a difference between any of the acquired control parameters indicating the condition of the gas-mode combustion process and its target value is more than a predetermined difference in at least one of the cylinders of the engine, the introduction of the gaseous fuel to the at least one of the cylinders is stopped and subsequently the introduction of the liquid fuel to the at least one of the cylinders is commenced while in other cylinders of the engine combustion of the gaseous fuel is proceeded,
**characterized in that**
in the step (d) the at least one of the cylinders is transferred to diesel mode and that during the engine is operated by combusting the gaseous fuel in all of the cylinders of the engine the primary control unit (35) of the liquid fuel feed system is continuously maintained at control position having been set to engine's current circumstances proportional to engine's load and the secondary control unit (34) is set to maintain the liquid fuel system closed.

2. Method according to claim 1, **characterized in that** step (d) is practiced using anyone of the following control parameters: knocking, misfiring, too high cylinder pressure, high exhaust gas temperature, and/or low exhaust gas temperature.

3. A multi-cylinder internal combustion piston engine (10) comprising a gaseous fuel feed system (20) and a liquid fuel feed system (30) and a control system (40) arranged to control the operation of the engine, the engine further comprising control units (24, 34) in the gaseous and the liquid fuel feed systems the operation of the which is arranged to be controllable by the control system (40), which the control system is arranged to
(a) operate the engine by combusting the gaseous fuel in all of the cylinders of the engine;
(b) acquire control parameters indicating the condition of the gas-mode combustion process during the operation from the engine indicating the combustion process with the gaseous fuel in at least one of the cylinders;
(c) compare the control parameters to their respective target values and
(d) in case a difference between any of the acquired control parameters indicating the condition of the gas-mode combustion process, and its target value is more than a predetermined difference, stopping the introduction of the gaseous fuel to the at least one cylinder and subsequently commence the introduction of the liquid fuel to the at least one cylinder while proceeding in other cylinders of the engine the combustion of the gaseous fuel,
**characterized in that**
in the step (d) the control system is arranged to transfer the at least one cylinder to diesel mode and the liquid fuel feed system (30) is provided with two actuation systems (34, 35), a primary control unit (35) and a secondary control unit (34) arranged in series in the liquid fuel feed system, and **in that** the primary control unit (35) of the liquid fuel feed system is arranged to continuously maintain control position set to engine's current circumstances proportional to engine's load, and to set the secondary control unit (34) to maintain the liquid fuel system closed.

## Patentansprüche

1. Verfahren zum Betreiben eines Mehrzylinder-Kolbenverbrennungsmotors (10), wobei der Motor ein Zuführsystem für gasförmigen Kraftstoff (20) und ein Zuführsystem für flüssigen Kraftstoff (30) umfasst, wobei der Betrieb des Zuführsystems für flüssigen Kraftstoff durch zwei Betätigungssysteme, eine primäre Steuereinheit (35) und eine sekundäre Steuereinheit (34) zum Steuern der Zufuhr des flüssigen Kraftstoffs, gesteuert wird, die in dem Zuführsystem für flüssigen Kraftstoff in Reihenschaltung angeordnet sind, wobei bei dem Verfahren, während der Motor läuft,
(a) der Motor durch Verbrennen des gasförmigen Kraftstoffs in allen Zylindern des Motors im Gasbetrieb betrieben wird;
(b) während die Betriebssteuerparameter, die den Zustand des Verbrennungsprozesses im Gasmodus anzeigen, vom Motor erfasst werden, die den Verbrennungsprozess mit dem gasförmigen Brennstoff anzeigen;
(c) die Steuerparameter mit ihren jeweiligen Sollwerten verglichen werden und
(d) für den Fall, dass eine Differenz zwischen einem der erfassten Steuerparameter, die den Zustand des Verbrennungsprozesses im Gasmodus anzeigen, und seinem Sollwert mehr als eine vorbestimmte Differenz in mindestens einem der Zylinder des Motors beträgt, die Zufuhr des gasförmigen Kraftstoffs in den mindestens einen der Zylinder gestoppt wird und anschließend die Zufuhr des flüssigen Kraftstoffs in den mindestens einen der Zylinder begonnen wird, während in anderen Zylindern des Motors die Verbrennung des gasförmigen Kraftstoffs fortgesetzt wird,
**dadurch gekennzeichnet, dass**
in dem Schritt (d) der mindestens eine der Zylinder in den Dieselmodus überführt wird und dass, während der Motor durch Verbrennen des gasförmigen Kraftstoffs in allen Zylindern des Motors betrieben wird, die primäre Steuereinheit (35) des Zuführsystems für flüssigen Kraftstoff kontinuierlich in einer Steuerposition gehalten wird, die auf die aktuellen Umstände des Motors proportional zur Last des Motors eingestellt ist, und die sekundäre Steuereinheit (34) so eingestellt ist, dass das System für flüssigen Kraftstoff geschlossen bleibt.

2. Verfahren nach Anspruch 1, **dadurch gekennzeichnet, dass** der Schritt (d) unter Verwendung eines der folgenden Steuerparameter durchgeführt wird: Klopfen, Zündaussetzer, zu hoher Zylinderdruck, hohe Abgastemperatur und/oder niedrige Abgastemperatur.

3. Mehrzylinder-Kolbenverbrennungsmotor (10), umfassend ein Zuführsystem für gasförmigen Kraftstoff (20) und ein Zuführsystem für flüssigen Kraftstoff (30) sowie ein Steuersystem (40), das so angeordnet ist, dass es den Betrieb des Motors steuert, wobei der Motor ferner Steuereinheiten (24, 34) in dem Zuführsystem für gasförmigen Kraftstoff und dem Zuführsystem für flüssigen Kraftstoff umfasst, deren Betrieb durch das Steuersystem (40) gesteuert werden kann, wobei das Steuersystem angeordnet ist zum
(a) Betreiben des Motors durch Verbrennen des gasförmigen Kraftstoffs in allen Zylindern des Motors;
(b) Erfassen von Steuerparametern, die den Zustand des Verbrennungsprozesses im Gasmodus während des Betriebs vom Motor anzeigen, der den Verbrennungsprozess mit dem gasförmigen Kraftstoff in mindestens einem der Zylinder anzeigt;
(c) Vergleichen der Steuerparameter mit ihren jeweiligen Sollwerten und
(d) , falls eine Differenz zwischen einem der erfassten Steuerparameter, die den Zustand des Verbrennungsprozesses im Gasmodus anzeigen, und sein Sollwert größer als eine vorbestimmte Differenz ist, Anhalten der Zufuhr des gasförmigen Kraftstoffs in den mindestens einen Zylinder und anschließendes Beginnen der Zufuhr des flüssigen Kraftstoffs in den mindestens einen Zylinder, während die Verbrennung des gasförmigen Kraftstoffs in anderen Zylindern des Motors fortgesetzt wird,
**dadurch gekennzeichnet, dass**
in dem Schritt (d) das Steuersystem angeordnet ist, um den mindestens einen Zylinder in den Dieselmodus zu überführen, und das Zuführsystem für flüssigen Kraftstoff (30) mit zwei Betätigungssystemen (34, 35), einer primären Steuereinheit (35) und einer sekundären Steuereinheit (34) versehen ist, die in dem Zuführsystem für flüssigen Kraftstoff in Reihenschaltung angeordnet sind, und dass die primäre Steuereinheit (35) des Zuführsystems für flüssigen Kraftstoff angeordnet ist, um die Steuerposition, die auf die aktuellen Umstände des Motors proportional zur Motorlast eingestellt ist, kontinuierlich aufrechtzuerhalten, und um die sekundäre Steuereinheit (34) einzustellen, um das System für flüssigen Kraftstoff geschlossen zu halten.

## Revendications

1. Procédé de fonctionnement d'un moteur à piston à combustion interne à plusieurs cylindres (10), le moteur comprenant un système d'alimentation en carburant gazeux (20) et un système d'alimentation en carburant liquide (30), le fonctionnement du système d'alimentation en carburant liquide étant commandé par deux systèmes d'actionnement, une unité de commande primaire (35) et une unité de commande secondaire (34) destinées à commander l'introduction du carburant liquide, lesquelles sont disposées en série dans le système d'alimentation en carburant liquide, ledit procédé comprenant, lorsque le moteur est en marche
(a) le fonctionnement du moteur par combustion du carburant gazeux dans tous les cylindres du moteur en mode gaz ;
(b) pendant le fonctionnement, l'acquisition de paramètres de commande indiquant l'état du processus de combustion en mode gaz, à partir du moteur, indiquant le processus de combustion avec le carburant gazeux ;
(c) la comparaison des paramètres de commande avec leurs valeurs cible respectives, et
(d) si une différence entre l'un quelconque des paramètres de commande acquis indiquant l'état du processus de combustion en mode gaz et sa valeur cible est supérieure à une différence prédéterminée dans l'un au moins des cylindres, l'arrêt de l'introduction du carburant gazeux dans l'un au moins des cylindres, suivi du démarrage de l'introduction du carburant liquide dans l'un au moins des cylindres, tandis que la combustion du carburant gazeux est poursuivie dans d'autres cylindres du moteur,
**caractérisé en ce que**
dans l'étape (d), l'au moins un des cylindres est transféré dans un mode diesel et **en ce que** pendant le fonctionnement du moteur par combustion du carburant gazeux dans tous les cylindres du moteur, l'unité de commande primaire (35) du système d'alimentation en carburant liquide est maintenue en continu sur une position de commande réglée selon les circonstances actuelles du moteur proportionnellement à la charge du moteur, et l'unité de commande secondaire (34) est réglée de manière à maintenir le système de carburant liquide fermé.

2. Procédé selon la revendication 1, **caractérisé en ce que** l'étape (d) est mise en œuvre à l'aide de l'un quelconque des paramètres de commande suivants : cognement, défaut d'allumage, pression de cylindre trop élevée, température de gaz d'échappement élevée, et/ou température de gaz d'échappement basse.

3. Moteur à piston à combustion interne à plusieurs cylindres (10), comprenant un système d'alimentation en carburant gazeux (20) et un système d'alimentation en carburant liquide (30), ainsi qu'un système de commande (40) conçu pour commander le fonctionnement du moteur, le moteur comprenant en outre des unités de commande (24, 34) dans les systèmes d'alimentation en carburant gazeux et liquide, dont le fonctionnement est conçu de manière à pouvoir être commandé par le système de commande (40), ledit système de commande étant conçu pour
(a) faire fonctionner le moteur par combustion du carburant gazeux dans tous les cylindres du moteur ;
(b) acquérir des paramètres de commande indiquant l'état du processus de combustion en mode gaz pendant le fonctionnement, à partir du moteur, indiquant le processus de combustion avec le carburant gazeux dans l'un au moins des cylindres ;
(c) comparer les paramètres de commande avec leurs valeurs cible respectives, et
(d) si une différence entre l'un quelconque des paramètres de commande acquis indiquant l'état du processus de combustion en mode gaz et sa valeur cible est supérieure à une différence prédéterminée, arrêter l'introduction du carburant gazeux dans l'au moins un cylindre, puis démarrer l'introduction du carburant liquide dans l'au moins un cylindre, tandis que la combustion du carburant gazeux est poursuivie dans d'autres cylindres du moteur,
**caractérisé en ce que**
dans l'étape (d), le système de commande est conçu pour transférer l'au moins un cylindre dans un mode diesel et le système d'alimentation en carburant liquide (30) est doté de deux systèmes d'actionnement (34, 35), une unité de commande primaire (35) et une unité de commande secondaire (34) disposées en série dans le système d'alimentation en carburant liquide, et **en ce que** l'unité de commande primaire (35) du système d'alimentation en carburant liquide est conçue pour maintenir en continu une position de commande réglée selon les circonstances actuelles du moteur proportionnellement à la charge du moteur, et pour régler l'unité de commande secondaire (34) de manière à maintenir le système de carburant liquide fermé.
